# EUROPÄISCHE PATENTSCHRIFT

(11) **EP 0 504 572 B1**
(45) Veröffentlichungstag und Bekanntmachung des Hinweises auf die Patenterteilung: **27.04.1994**
(21) Anmeldenummer: 92101949.3
(22) Anmeldetag: 06.02.1992
(51) Int. Cl.: F16B 37/14, E04F 13/08

(54) **Befestigungselement für die Befestigung von wärmeisolierenden Platten**
Fastening element for fastening thermally insulating plates
Elément de fixation pour la fixation de plaques à isolation thermique

(30) Priorität: 20.03.1991 DE 9103388 U
(43) Veröffentlichungstag der Anmeldung: 23.09.1992
(73) Patentinhaber: HARDO- BEFESTIGUNGEN GMBH, 59823 Arnsberg (DE)
(72) Erfinder: Fitzke, Michael, D-5787 Olsberg (DE)
(74) Vertreter: Fritz, Edmund Lothar, Dipl.-Chem.

(56) Entgegenhaltungen:
- DE-A- 3 045 986
- DE-A- 3 841 137

## Beschreibung

Die vorliegende Erfindung betrifft ein Befestigungselement für die Befestigung von wärmeisolierenden Platten an einer Unterkonstruktion mit einer großflächigen Druckplatte aus Kunststoff und einem angeformten hohlen Schaft aus Kunststoff, der an seinem vorderen Ende einen Spreizbereich aufweist und dessen Höhlung geeignet ist, eine Metallschraube aufzunehmen, wobei die von außen zugängliche Höhlung an ihrem der Druckplatte zugewandten Ende mittels eines Abdeckteils verschließbar ist und wobei das Abdeckteil von einer zentrischen Ausnehmung der Druckplatte aufgenommen wird, wobei das Abdeckteil einen angeformten als Gelenk wirkenden Steg aufweist und aus seiner Abdeckstellung in eine Stellung hochschwenkbar ist, in der es die Höhlung freigibt. Ein Befestigungselement dieser Art ist beispielsweise aus der DE-A-30 45 986 bekannt. Bei diesem bekannten Befestigungselement ist als Abdeckteil eine Abdeckplatte vorgesehen, die nach Einbringen eines stiftförmigen Metallteils in den Untergrund geeignet ist, die Höhlung zu verschließen, wobei die Abdeckplatte einen abgerundeten Randquerschnitt aufweist, der in eine Unterschneidung einer Ausnehmung der Druckplatte einrastbar ist. Durch die Abdeckplatte soll das stiftförmige Metallteil vor Feuchtigkeit und somit gegen Rostbildung geschützt werden. Bei diesem bekannten Befestigungselement hängt diese Abdeckplatte über ein angeformtes dünnes Bändchen, das relativ kurz ist, mit der Druckplatte zusammen. Da dieses dünne Bändchen als Gelenk wirkt, kann die Abdeckplatte hochgeklappt werden, um das stiftförmige Metallteil einzubringen. Die Abdeckplatte hängt jedoch immer mit der Druckplatte fest zusammen. Es hat sich in der Praxis als nachteilig erwiesen, daß nach dem Verschließen der Höhlung durch Einrasten der Abdeckplatte das Bändchen eine hochstehende Schlaufe bildet. Dieser überstand erweist sich beim anschließenden Auftragen der Putzschicht als störend.

Es ist daher die Aufgabe der vorliegenden Erfindung, ein Befestigungselement für die Befestigung von wärmeisolierenden Platten an einer Unterkonstruktion der eingangs genannten Art zur Verfügung zu stellen, bei dem unter Vermeidung der vorgenannten Nachteile das Abdeckteil, mit dem die Höhlung des Befestigungselements nach dem Eindringen einer Metallschraube verschlossen wird, so mit der Druckplatte verbindbar ist, daß keine störenden nach oben vorragenden Teile vorhanden sind.

Die Lösung dieser Aufgabe liefert ein erfindungsgemäßes Befestigungselement der eingangs genannten Art mit den kennzeichnenden Merkmalen des Anspruchs 1. Gemäß der Erfindung ist das Abdeckteil über eine Rastverbindung am Ende des angeformten Stegs mit der Druckplatte lösbar verbindbar. Das Abdeckteil kann also als separates Teil mit dem Befestigungselement geliefert werden und wird dann vor der Montage durch Eindrücken eines Rastelements am Stegende mit der Druckplatte des Befestigungselements verbunden. Nach dieser Befestigung ist erfindungsgemäß das Abdeckteil außerdem an der Druckplatte um eine durch das Ende des Stegs gehende und zum hohlen Schaft des Befestigungselements parallele Achse schwenkbar an der Druckplatte gehalten. Wenn die Metallschraube eingeschraubt ist, kann dann zum Verschließen der Höhlung des Befestigungselements das Abdeckteil um seinen Befestigungspunkt am Stegende soweit geschwenkt werden, bis es sich über der zu verschließenden Höhlung befindet. Anschließend wird durch Eindrücken des Abdeckteils in eine zentrische Ausnehmung der Druckplatte die Höhlung verschlossen. Da das Abdeckteil um praktisch 360° geschwenkt werden kann, kann es durch Schwenken aus dem Bereich der Höhlung entfernt werden, so daß es beim Einschrauben der Schraube nicht behindert. Der Steg, der am Abdeckteil angeformt ist und an seinem anderen Ende ein Rastelement aufweist, ist vorzugsweise so lang, daß die Rastverbindung im äußeren Bereich der Druckplatte erfolgt. Vorzugsweise ist am Steg endseitig ein Lagerzapfen angeformt, der in einer Bohrung der Druckplatte verrastbar ist. Diese Bohrung kann sich beispielsweise in einem ringförmigen äußeren Abschnitt der Druckplatte befinden. In der Regel weist die Druckplatte zwischen der Ausnehmung, die das Abdeckteil aufnimmt und diesem äußeren ringförmigen Abschnitt Durchbrechungen auf, durch die der Putz eindringt. Das Abdeckteil kann beispielsweise eine Art Abdeckplatte sein, bei deren Eindrücken in eine zentrische Ausnehmung der Druckplatte die Höhlung des Befestigungselements verschlossen wird. Das Abdeckteil kann aber auch kappenförmig ausgebildet sein mit einem zylindrischen Bereich, der beim Eindrücken in die Ausnehmung der Druckplatte den Kopf der in die Höhlung eingebrachten Schraube übergreift, wodurch ein besonders sicherer Korrosionsschutz des Schraubenkopfs erzielt wird. Die in den Unteransprüchen genannten Merkmale beziehen sich auf vorteilhafte Ausführungsformen der vorliegenden Erfindung.

Nachfolgend wird die Erfindung anhand von Ausführungsbeispielen unter Bezugnahme auf die beiliegenden Zeichnungen näher beschrieben. Dabei zeigen
- Fig. 1: eine Ansicht einer Variante des erfindungsgemäßen Befestigungselements mit der Metallschraube aber ohne Abdeckteil;
- Fig. 2: eine vergrößerte Draufsicht auf das Befestigungselement in Richtung des Pfeils II von Fig. 1 gesehen;
- Fig. 3: eine vergrößerte Längsschnittdarstellung durch den oberen Teil eines erfindungsgemäßen Befestigungselements mit Abdeckteil;
- Fig. 4: eine Seitenansicht und Draufsicht des Abdeckteils gemäß einer Variante der Erfindung;
- Fig. 5: eine Seitenansicht und Draufsicht eines Abdeckteils gemäß einer weiteren Variante der Erfindung;
- Fig. 6: eine vergrößerte Längsschnittdarstellung durch den oberen Teil eines erfindungsgemäßen Befestigungselements mit Abeckteil gemäß einer Variante der Erfindung.

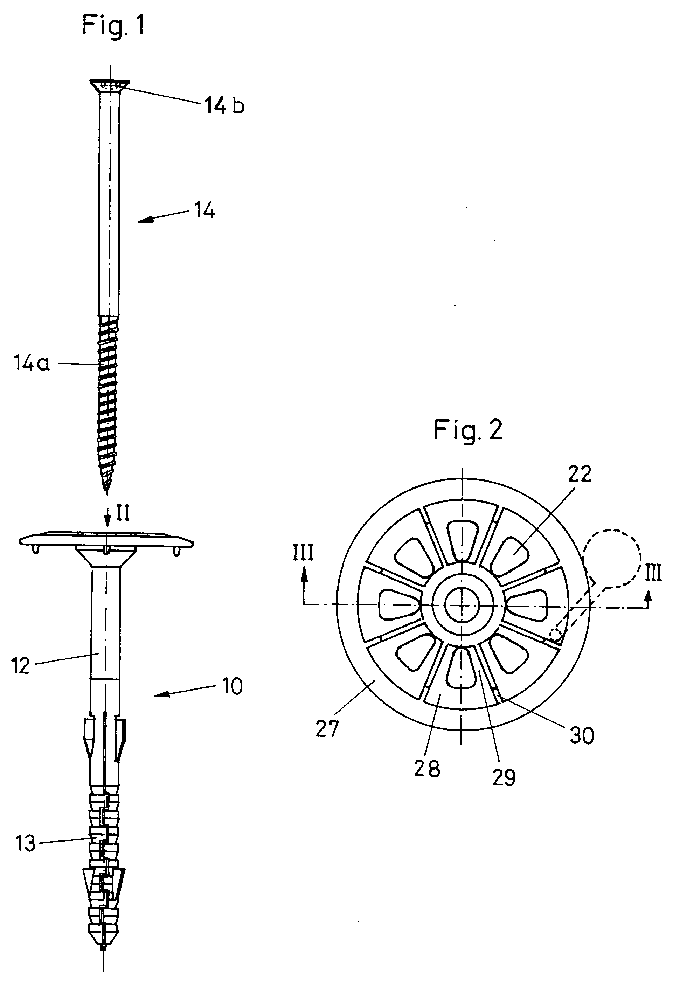

Es wird zunächst auf Fig. 1 Bezug genommen. Die Darstellung zeigt ein erfindungsgemäßes Befestigungselement 10 für die Befestigung von wärmeisolierenden Platten an einer Unterkonstruktion (sogenannter Isolierplattendübel). Das Befestigungselement 10 weist am einen Enden eine angeformte großflächige Druckplatte 11 auf und im rechten Winkel zu dieser Druckplatte 11 erstreckt sich ein hohler Schaft 12.

Der untere Bereich des Schafts ist als Spreizbereich 13 ausgebildet. Dieser Spreizbereich 13 wird bei der Befestigung in einem Bohrloch des Untergrunds (nicht dargestellt) aufgenommen, während der glatte Teil des Schafts sich durch die Isolierplatte erstreckt. Die Befestigung erfolgt mit Hilfe der Schraube 14, die im vorderen Bereich ein Gewinde 14a aufweist und gemäß der Vorschrift in den Isolierplattendübel 10 eingeschraubt werden muß, wobei dann der vordere Spreizbereich 13 des Isolierplattendübels sich im Bohrloch spreizt und das Befestigungselement verankert.

Wie aus Fig. 2 ersichtlich ist, weist die Druckplatte 11, die die an der Unterkonstruktion zu befestigende Isolierplatte (nicht dargestellt) andrückt, einen äußeren durchgehenden ringförmigen Abschnitt 27 auf, an den sich zum Mittelpunkt hin ein mittlerer durchbrochener Abschnitt 28 mit Durchbrechungen 22 anschließt, durch die der aufzutragende Putz eindringen kann. Zwischen den Durchbrechungen 22 verbleiben jeweils Materialstege 29, die radial verlaufen. Diese Materialstege 29 verbinden den äußeren ringförmigen Abschnitt 27 mit einem mittleren ringförmigen Abschnitt, der eine zentrische Ausnehmung 15 aufweist. Konzentrisch in dieser Ausnehmung 15 liegt die Öffnung der Höhlung 19, die den Schaft der Schraube 14 aufnimmt. Nach Befestigung der Schraube 14 liegt deren Kopf versenkt in der Ausnehmung 15. Der Schaft 12 weist im oberen Bereich im Übergang zu der Ausnehmung 15 einen verdickten Abschnitt 24 mit größerer Wandstärke auf. An die zylindrische Höhlung 19 schließt sich im Bereich dieses verdickten Abschnitts eine konische Erweiterung 20 an, die dann wiederum nach oben hin in die Ausnehmung 15 übergeht, wobei die Wandung der Ausnehmung 15 zylindrisch ist.

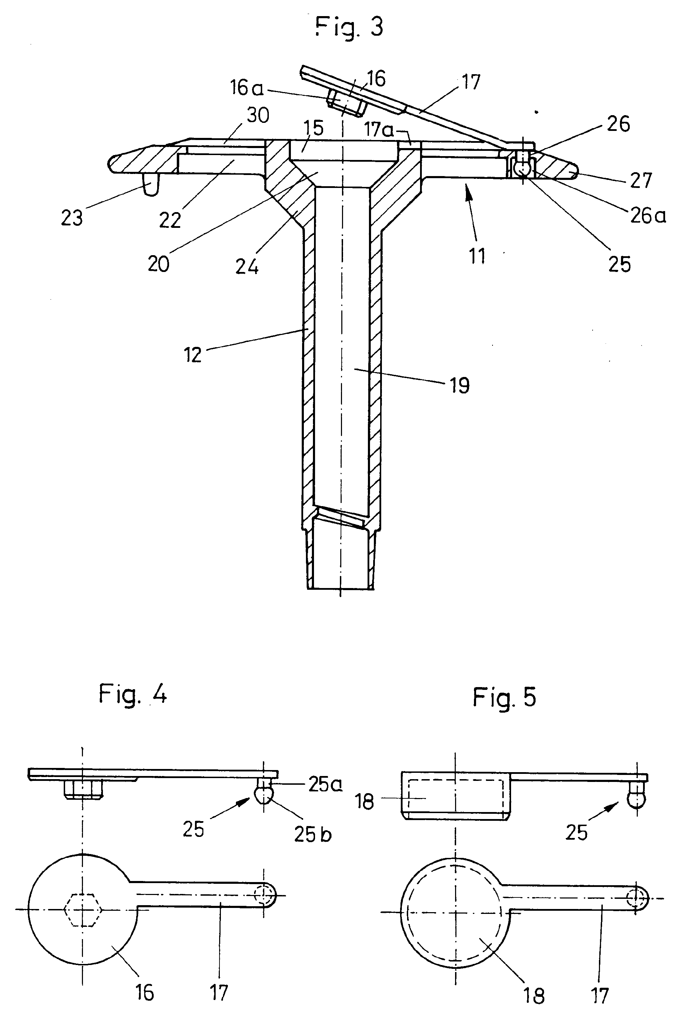

Es wird nun auf Fig. 3 und Fig. 4 Bezug genommen, die das Abdeckteil 16, 17 zeigt, das aus einer kreisrunden Abdeckplatte 16 besteht, die in ihrem Durchmesser der Ausnehmung 15 der Druckplatte 11 angepaßt ist. Radial erstreckt sich von der Abdeckplatte 16 ein angeformter Steg 17 nach außen. Am äußeren Ende des Stegs 17 ist an diesem ein sich nach unten erstreckender Lagerzapfen 25 angeformt, der einen oberen zylindrischen Teil 25a aufweist und einen etwas verdickten unteren zapfenförmigen oder fast kugelförmigen Teil 25b. In dem äußeren ringförmigen Abschnitt 27 der Druckplatte ist eine Bohrung 26 vorgesehen, deren Durchmesser etwa dem Durchmesser des zylindrischen Teils 25a des Lagerzapfens entspricht, so daß der Durchmesser der Bohrung 26 etwas geringer ist als der Durchmesser des verdickten Teils 25b des Lagerzapfens 25. Der Lagerzapfen kann daher in die Bohrung 26 eingedrückt werden, wobei er diese etwas erweitert und dann in die sich unten an die Bohrung 26 anschließende etwas erweiterte Freibohrung 26a einspringt, so daß sich eine Rastverbindung ergibt. Der relativ dünne Steg 17 aus Kunststoff ist elastisch, so daß die Abdeckplatte 16 hochgeklappt werden kann. Außerdem ist die Verbindung zwischen dem Lagerzapfen 25 und der Druckplatte 11 gelenkig, so daß das Abdeckteil um die Achse des Lagerzapfens, die parallel zur Achse des hohlen Schafts 12 verläuft, schwenkbar ist. Die Abdeckplatte 11 des Abdeckteils kann folglich um den Lagerzapfen 25 geschwenkt werden, so weit, daß sie außerhalb des Umrißbereichs der Druckplatte 11 liegt (in Fig. 2 ist dies durch die gestrichelte Darstellung der Abdeckplatte angedeutet). Im montierten Zustand, das heißt bei eingedrückter Abdeckplatte 16 wird diese von der Ausnehmung 15 der Druckplatte aufgenommen und der an der Abdeckplatte 16 angeformte Steg 17 liegt völlig flach auf der Druckplatte. In der Wandung der Druckplatte rund um die Ausnehmung 15 kann eine Einkerbung 17a vorhanden sein (siehe Fig. 3), die den Steg 17 aufnimmt, so daß dieser völlig flach und waagerecht liegt. Die Abdeckplatte 16 weist bei dieser Variante der Erfindung an der Unterseite eine im Umriß sechskantförmige Anformung auf, mittels derer eine formschlüssige Verbindung zwischen der Abdeckplatte 16 und der Schraube 14 herstellbar ist. Die Schraube weist in ihrem Kopf einen Innensechskant 14b auf, der die im Umriß sechskantförmige Anformung 16b der Abdeckplatte aufnimmt, so daß durch die Abdeckplatte nicht nur die Höhlung des Befestigungselements verschlossen wird, sondern auch eine mechanische Verbindung zwischen Abdeckplatte und der von der Höhlung des Befestigungselements aufgenommenen Schraube 14 hergestellt wird.

Vorzugsweise weist die Druckplatte 11 an ihrer Oberseite, wie aus Fig. 3 ersichtlich ist, angeformte Rippen 30 auf, die radial zwischen den Durchbrechungen 22 verlaufen. Die neben der Bohrung 26 in der Druckplatte 11 verlaufende Rippe 30 kann dann, wenn die Halteplatte 16 um den Lagerzapfen geschwenkt wird, als Anschlag für den Steg 17 und somit als Montagehilfe dienen. Wenn der Steg 17 an der Rippe 30 anliegt, befindet sich die Abdeckplatte 16 über der abzudeckenden Ausnehmung 15.

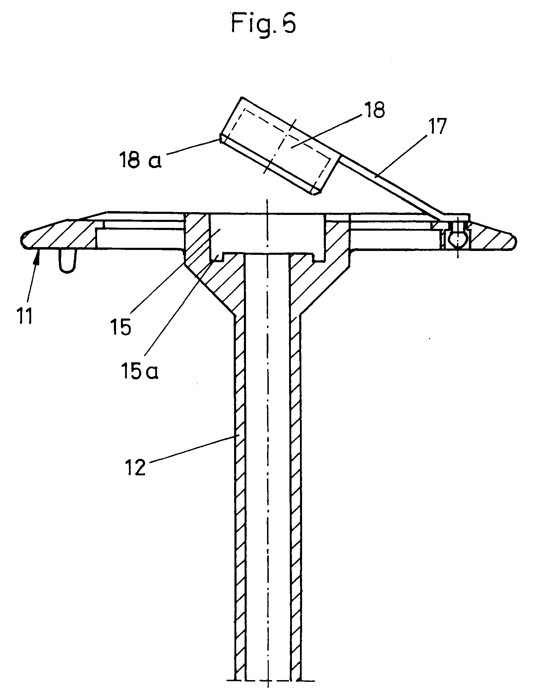

Fig. 5 zeigt eine alternative Ausführungsform des Abdeckteils. Ebenso wie bei der vorbeschriebenen Variante ist wiederum ein kreisrundes Abdeckteil vorgesehen, das im Durchmesser der Ausnehmung 15 entspricht und an dem ein länglicher Steg 17 angeformt ist, der an seinem freien Ende an der Unterseite den angeformten Lagerzapfen 25 aufweist. Bei dieser Variante der Erfindung ist das Abdeckteil als Abdeckkappe 18 ausgebildet, die eine zylindrische Seitenwandung aufweist und seitlich und nach oben hin geschlossen ist, aber nach unten hin offen ist, so daß die Abdeckkappe 18 beim Eindrücken in die Ausnehmung 15 den Kopf der Metallschraube 14 übergreift und vor Feuchtigkeit schützt und gleichzeitig die Höhlung 19 nach außen dicht verschließt.

Fig. 6 zeigt die alternative Ausführungsform des Befestigungselements bei Verwendung des Abdeckteils 18 gemäß Fig. 5. Bei dieser Ausführungsform ist die Ausnehmung 15 der Druckplatte 11 zylindrisch ausgebildet und weist eine etwas größere Tiefe auf, als bei der Variante gemäß Fig. 3. Die konische Erweiterung 20 entfällt. Statt dessen ist im Boden der Ausnehmung 15 eine außen umlaufende Ringnut 15a vorgesehen, die in ihren Abmessungen der Wandstärke der Abdeckkappe 18 etwa entspricht. Auf diese Weise wird beim Eindrücken der Abdeckkappe 18 in die Ausnehmung 15 der untere Teil 18a der Wandung der Abdeckkappe von der Ringnut 15a aufgenommen, so daß eine formschlüssige Verbindung zwischen Abdeckkappe 18 und dem Befestigungselement 10 hergestellt wird.

## Patentansprüche

1. Befestigungselement für die Befestigung von wärmeisolierenden Platten an einer Unterkonstruktion mit einer großflächigen Druckplatte aus Kunststoff und einem angeformten hohlen Schaft aus Kunststoff, der an seinem vorderen Ende einen Spreizbereich aufweist und dessen Höhlung geeignet ist, eine Metallschraube aufzunehmen, wobei die von außen zugängliche Höhlung an ihrem der Druckplatte zugewandten Ende mittels eines Abdeckteils verschließbar ist und wobei das Abdeckteil von einer zentrischen Ausnehmung der Druckplatte aufgenommen wird, wobei das Abdeckteil einen angeformten als Gelenk wirkenden Steg aufweist und aus seiner Abdeckstellung in eine Stellung hochschwenkbar ist, in der es die Höhlung freigibt,
dadurch gekennzeichnet, daß das Abdeckteil (16, 18) über eine Rastverbindung am Ende des Stegs (17) mit der Druckplatte (11) lösbar verbindbar ist und daß das Abdeckteil (16, 18) um eine durch das Ende des Stegs (17) gehende zum hohlen Schaft (12) parallele Achse schwenkbar an der Druckplatte (11) befestigbar ist.

2. Befestigungselement für die Befestigung von wärmeisolierenden Platten an einer Unterkonstruktion nach Anspruch 1, dadurch gekennzeichnet, daß am Steg (17) endseitig ein Lagerzapfen (25) angeformt ist, der in einer Bohrung (26, 26a) der Druckplatte (11) verrastbar ist.

3. Befestigungselement für die Befestigung von wärmeisolierenden Platten an einer Unterkonstruktion nach Anspruch 1 oder 2, dadurch gekennzeichnet, daß der Lagerzapfen (25) im unteren Bereich eine Verdickung (25b) aufweist, die den Durchmesser der Bohrung (26) der Druckplatte (11) etwas übersteigt und daß sich an die Bohrung (26) eine nach unten offene Freibohrung (26a) mit vergrößertem Durchmesser anschließt.

4. Befestigungselement für die Befestigung von wärmeisolierenden Platten an einer Unterkonstruktion nach einem der Ansprüche 1 bis 3, dadurch gekennzeichnet, daß sich die Bohrung (26, 26a) in einem ringförmigen äußeren Abschnitt (27) der Druckplatte befindet.

5. Befestigungselement für die Befestigung von wärmeisolierenden Platten an einer Unterkonstruktion nach einem der Ansprüche 1 bis 4, dadurch gekennzeichnet, daß an der Druckplatte (11) oberseitig wenigstens eine Rippe (30) angeformt ist, die als Anschlag für den Steg (17) in seiner der Abdeckstellung entsprechenden Lage dient.

6. Befestigungselement für die Befestigung von wärmeisolierenden Platten an einer Unterkonstruktion nach einem der Ansprüche 1 bis 5, dadurch gekennzeichnet, daß das Abdeckteil (18) als die Ausnehmung (15) verschließende Abdeckplatte ausgebildet ist.

7. Befestigungselement für die Befestigung von wärmeisolierenden Platten an einer Unterkonstruktion nach einem der Ansprüche 1 bis 6, dadurch gekennzeichnet, daß das Abdeckteil (18) als eine in der Abdeckstellung den Kopf der Schraube (14) übergreifende und gleichzeitig die Ausnehmung (15) verschließende Abdeckkappe ausgebildet ist.

## Claims

1. Fastening element for fastening heat insulating plates to an undercarriage, comprising a large-area pressure plate of plastic material and an intergrally formed hollow shaft of plastic material which has at its leading end an expandable portion and the cavity of which is able to reveice a metal screw, said cavity, which is accessible from the outward side, being able to be closed at the side facing the pressure plate by means of a covering portion, said covering portion being received by a central recess of the pressure plate and comprising an integral web serving as an articulation, so that it can be pivoted from its covering position in a position in which the cavity is opened,
characterised in that the covering portion (16, 18) can be detachably connected to the pressure plate (11) by means of a notch connection at the end of the web (17), and that the covering portion (16, 18) is fastenable to the pressure plate (11) in such a manner that it is pivotable about an axis extending through the end of the web (17) and parallel to the hollow shaft (12).

2. Fastening element for fastening heat insulating plates to an undercarriage as claimed in claim 1, characterised in that a bearing pin (25) is integrally formed with the end of the web (17) which is lockable in a bore (26, 26a) of the pressure plate (11).

3. Fastening element for fastening heat insulating plates to an undercarriage as claimed in claim 1 or 2, characterised in that the bearing pin (25) has, at its lower region, a thickened portion (25b) the diameter of which is slightly larger than the diameter of the bore (26) of the pressure plate, and that the bore (26) joins up with a free bore (26a) with enlarged diameter which is open downwardly.

4. Fastening element for fastening heat insulating plates to an undercarriage as claimed in any one of claims 1 to 3, characterised in that the bore (26, 26a) is located in an annular outer portion (27) of the pressure plate.

5. Fastening element for fastening heat insulating plates to an undercarriage as claimed in any one of claims 1 to 4, characterised in that at least one rip (30) is integrally formed with the upper side of the pressure plate (11), which serves as an abutment for the web (17) in its position corresponding to the covering position.

6. Fastening element for fastening heat insulating plates to an undercarriage as claimed in any one of claims 1 to 5, characterised in that the covering portion (18) is formed as a covering plate closing the recess (15).

7. Fastening element for fastening heat insulating plates to an undercarriage as claimed in any one of claims 1 to 6, characterised in that the covering portion (18) is formed as a covering cap which overlaps the head of the screw (14) and, at the same time, closes the recess (15) in its covering position.

## Revendications

1. Elément de fixation pour la fixation des plaques calorifuges à une substruction, avec une plaque à pression à grande surface en matière plastique et une tige creuse en matière plastique formant une partie intégrante et comprenant à l'extrémité avant une région d'écartement, la cavité de cette tige étant apte à recevoir une vis à métaux, la cavité qui est accessible du dehors peut être fermer à l'extrémité en face de la plaque à pression au moyen d'une pièce de recouvrement, la pièce de recouvrement étant reçue dans un évidement central de la plaque à pression et comprenant comme partie intégrante une entretoise ayant l'effet d'une articulation et étant capable de pivoter vers le haut de sa position de recouvrement dans une position dans laquelle elle affranchit la cavité,
caractérisé en ce que la pièce de recouvrement (16, 18) est assemblable avec la plaque à pression (11) au moyen d'un raccord d'arrêt au bout de l'entretoise (17) et que la pièce de recouvrement (16, 18) est fixable à la plaque à pression (11) de manière d'être pivotante autour d'un axe qui est parallèle à la tige creuse (12) et qui traverse le bout de l'entretoise (17).

2. Elément de fixation pour la fixation des plaques calorifuges à une substruction selon la revendication 1, caractérisé en ce que l'entretoise (17) comprend à son bout un tourillon (25) comme partie intégrante qui est enclenchable dans un alésage (26, 26a) de la plaque à pression (11).

3. Elément de fixation pour la fixation des plaques calorifuges à une substruction selon la revendication 1 ou 2, caractérisé en ce que le tourillon (25) présente à sa partie inférieure un gonflement (25b) qui excède un peu le diamètre d'alésage (26) de la plaque à pression (11), et qu'un alésage libre (26a) avec un diamètre agrandi et ouvert vers le bas se joint à l'alésage (26).

4. Elément de fixation pour la fixation des plaques calorifuges à une substruction selon une des revendications 1 à 3, caractérisé en ce que l'alésage (26, 26a) se trouve dans une partie extérieure annulaire (27) de la plaque à pression (11).

5. Elément de fixation pour la fixation des plaques calorifuges à une substruction selon une des revendications 1 à 4, caractérisé en ce qu'au moins une nervure (30) forme une partie intégrante avec la face supérieure de la plaque à pression (11), qui fait fonction d'un arrêt pour l'entretoise (17) dans sa position correspondant à la position de recouvrement.

6. Elément de fixation pour la fixation des plaques calorifuges à une substruction selon une des revendications 1 à 5, caractérisé en ce que la pièce de recouvrement (18) est formée comme plaque de recouvrement fermant la cavité (15).

7. Elément de fixation pour la fixation des plaques calorifuges à une substruction selon une des revendications 1 à 6, caractérisé en ce que la pièce de recouvrement (18) est formée comme chapeau de recouvrement qui recouvre dans la position de recouvrement la tete de la vis (14) et ferme simultanément la cavité (15).
